# EUROPEAN PATENT SPECIFICATION

(11) **EP 3 313 973 B1**
(45) Date of publication and mention of the grant of the patent: **07.12.2022**
(21) Application number: 16738222.5
(22) Date of filing: 23.06.2016
(51) Int. Cl.: C12C 5/00, C12C 7/20, C12C 12/00

(54) **BEER AND BEER-BASED BEVERAGE CONTAINING LIGNANS, AND METHOD OF THEIR PRODUCTION**
BIER UND GETRÄNK AUF BIERBASIS MIT LIGNANEN UND VERFAHREN ZU DEREN HERSTELLUNG
BIÈRE ET BOISSON À BASE DE BIÈRE CONTENANT DES LIGNANES, ET PROCÉDÉ POUR LES PRODUIRE

(30) Priority: 23.06.2015 CZ 20150422
(43) Date of publication of application: 02.05.2018
(73) Proprietor: Mendelova Univerzita V Brne, Zahradnicka Fakulta, Ustav Poskliznove Technologie Zahradnickych Produktu, 69144 Lednice (CZ); Vyzkumny Ustav Potravinarsky Praha, V.V.I., 10231 Praha 10 (CZ); Centrum Vyzkumu Globalni Zmeny AV Cr, V.V.I., 60300 Brno (CZ)
(72) Inventor: HIC, Pavel, Devicany (SK); BALIK, Josef, Lednice (CZ); KULICHOVA, Jana, Trebic (CZ); SNURKOVIC, Petr, Straznice (CZ); HOUSKA, Milan, Praha 3 (CZ); STROHALM, Jan, Praha 3 (CZ); LANDFELD, Ales, Nesmen - Zasmuky (CZ); TRISKA, Jan, Ceske Budejovice (CZ); VRCHOTOVA, Nadezda, Ceske Budejovice (CZ)
(74) Representative: Novotny, Jaroslav
(86) International application number: PCT/IB2016/053730
(87) International publication number: WO 2016/207820

(56) References cited:
- WO-A1-2009/155887
- GB-A- 190 814 515
- David Ackley: "Homebrew Spruce Beer Recipe", , 11 October 2011 (2011-10-11), XP002761231, Retrieved from the Internet: URL:http://www.eckraus.com/blog/homebrew-s pruce-beer-recipe [retrieved on 2016-08-30]
- Anonymous: "Spruce Beer, or, A Beer to Ward Off Scurvy", Small Beer Press , 14 September 2009 (2009-09-14), XP002761232, Retrieved from the Internet: URL:http://smallbeerpress.com/not-a-journa l/2009/09/14/spruce-beer/ [retrieved on 2016-08-30]
- IVON E J MILDER ET AL: "Lignan contents of Dutch plant foods: a database including lariciresinol, pinoresinol, secoisolariciresinol and matairesinol", BRITISH JOURNAL OF NUTRITION, vol. 93, no. 3, 1 March 2005 (2005-03-01), pages 393-402, XP002667326, CAMBRIDGE UNIV. PRESS, UK ISSN: 0007-1145, DOI: 10.1079/BJN20051371 [retrieved on 2007-03-08]

## Description

### Technical field

The invention relates to the beer and beer-based beverage containing lignans, and the method of their production.

### Background Arts

In economically highly developed countries, tumour and cardio-vascular diseases represent a significant cause of mortality, which stems from several factors. Primarily, these include a bad life style and unbalanced nutrition. Foodstuffs frequently contain only a small amount of health-beneficial substances, leading to failure to obtain the recommended daily amount of such matter from the accepted diet. Therefore, possibilities of increasing the content of heath-beneficial substances in foodstuffs have been sought.

Beer is one of the most consumed beverages in the Czech Republic. It is easy to digest and supports the appetite. Beer is produced by the fermentation of wort prepared from malt, water and hops. Beer-based beverages include beverages from unhopped wort using a technological process similar to the production of beer. These beverages are frequently mixed with another kind of soft beverage, fruit juice, herbal extract, etc. At present, there are attempts to add health-beneficial substances, and thus to increase their positive effects on the human organism. European patent No. 2369947 protects the addition of polyphenols and colloidal silicon to beer and beer-based beverages. Utility model No. 18928 protects the beer with an increased content of rutin.

Another group of health-beneficial substances involves lignans. As secondary metabolites of vascular plants they are distinguished by antioxidant, antitumour, antiviral, antibacterial, insecticide, fungicide, estrogenic, antiestrogenic effects and, last but not least, by effects protecting against cardiovascular diseases. Linseed is a significant source of lignans containing up to 3.7 g/kg of secoisolariciresinol diglucoside. However, it is consumed minimally in usual nutrition. Other sources of lignans are: soya, rice, cereals, nuts and fruits. But the content of lignans in the aforesaid foodstuffs is as much as 1,000 times lower than in linseed; therefore they represent only a minimum source of lignans. A high content of lignans has been found in knots of coniferous trees that contain 5 to 10 % of lignans by weight. Knots of the European spruce (*Picea abies*) contain 6 to 29 % of lignans by weight, mostly hydroxymatairesinol (HMR) and alpha-conidendrin (CONI). Invention disclosure PV 2014 - 870 describes a suitable procedure as to how to obtain lignan extract from this natural source. The extracts of lignans obtained in this way can be added to foodstuffs and beverages, resulting in their increased content of health-beneficial substances. However, these additions can cause both foodstuffs and beverages to have a slightly bitter taste and resin aroma. The issue of lignans is dealt with in the following documents: Slanina, J. Biologická a farmakologická aktivita lignanů. Chemické Listy, 94, 2000, 111-116. Harmatha, J. Strukturní bohatství a biologicky vyznam lignanů a jim příbuzných rostlinných fenylpropanoidů. Chemické listy, 99, 2005, 622-632. Manach, C. et al. Polyphenols: Food sources and bioavailability. The American Journal of Clinical Nutrition, 79, 2004, 727-747. Holmbom B. et al. Knots in trees - A new rich source of lignans. Phytochemistry Reviews, 2, 2003, 331-340.

Documents-patents known from the references include GB 14515 A A.D. 1908 (KUMMLE ALBERT DE), 3 September 1908; David Ackley: "Homebrew Spruce Beer Recipe", 11 October 2011; and Anonymous" "Spruce Beer, or, A Beer to Ward Off Scurvy", 14 September 2009; that involve adding pine cones when boiling wort or describe a recipe for the preparation of spruce beer using hops and spruce tips, or extracts thereof, added into the mash or boiling wort. The disadvantage of these documents-patents is that they do not enrich beer with lignans sourced originating from the European spruce knots in a systematic manner.

Patent WO 2009/155887 A1 (Agra Group AS; CZ) Stuchlik Milan CZ and Kopenec Jiri CZ, 30 December 2009 involves adding *Silybum marianum* during production of beer. The disadvantage of this patent is that it enriches the beer with different types of lignans and other compounds that are not contained in knots of European spruce (above all HMR and CONI). Document entitled Milder I.E.J. et al. (2005) Lignan contents of Dutch plant foods: a database including lariciresinol, pinoresinol, secoisolariciresinol and matairesinol. British Journal of Nutrition 93, 393-402 is a listing of food processing raw materials and foodstuffs in terms of lignan content. It provides information on how much lignans there is in a standard beer (0.185 to 0.322 mg/1). This document does not address the content of lignans (HMR and CONI) in knots of European spruce and even additions of lignans into foodstuffs in terms of enriching with this group of substances.

### Disclosure of Invention

The aforesaid shortcomings are eliminated by beer and beer-based beverages containing lignans, and the method of their production according to this invention, the principle of which lies in the fact that beer and beer-based beverages contain 1 to 200 mg of lignans per litre of beverage and 0.01 to 1.0 g of granulated hops per litre of beverage. The method of production of beer and beer-based beverages consists in adding pre-treated aqueous extract from knots of the European spruce as a source of lignans to the basic ingredients of beer and the beverage. The method of production of beer and beer-based beverages consists in adding chips made from knots of the European spruce as a source of lignans to the basic ingredients of the beverage. The method of production of beer and beer-based beverages consists in adding aqueous extract from the European spruce at any production stage, but preferably at the initial stages of wort boiling, to ensure that the effect on the beer aroma and flavour will be minimal. The method of production of beer and beer-based beverages consists in adding chips made from knots of the European spruce at any production stage, but preferably at the final stages of wort boiling, to ensure that the effect on the beer aroma and flavour will be high.

For beer and beer-based beverages where an attempt is made to achieve minimal changes in product taste, it is appropriate to use aqueous extract from chips of the European spruce as a source of lignans to be added at the initial stage of wort boiling. It is appropriate to add a reduced amount of hops at the end of wort boiling to develop the expected beer aroma.

For beer and beer-based beverages where an attempt is made to achieve the maximum changes in product taste and simultaneously a fine resin aroma, it is appropriate to use chips made from knots of the European spruce as a source of lignans to be added at the final stage of wort boiling.

An advantage of the technical solution to this invention is that the additions of aqueous extracts of lignans, or of chips from the European spruce, as appropriate, can reduce their bitterish taste, or even to replace in full the amount of hops added in the course of wort boiling. It has been proved that lignans have many positive effects on human health, and the production of such beverages will result in increasing their content of these bioactive components significantly. This will also extend the range of beverages having health benefits. The bitterish taste and resign aroma of lignans eliminate the need of beer hopping. The beer and beer-based beverages feature a specific bitterish taste due to the production process and, therefore, are appropriate basic carriers of lignans extracted from knots of the European spruce.

### Made for Carrying out the Invention

The listed examples only document, but do not limit the production potential in any manner whatsoever.
1. For brewing 20 litres of bottom fermented beer, 24 litres of unhopped wort containing 10 % extract by weight obtained by traditional mashing were used. During wort boiling, i.e. after 15 minutes of boiling, 10.6 ml of alcohol extract of lignans made from knots of the European spruce, with HMR and CONI concentrations of 172.78 mg/ml and 16.3 mg/ml, respectively, are added. This corresponds to a total lignans concentration of 100 mg/l in the finished beverage. Then boiling takes place for 75 minutes. Subsequently, the hopped wort is cooled down and water is added to a value of 12 % extract. Then it is fermented using bottom fermentation brewery yeast. After five days of fermentation at a temperature of 13 °C, the beer is discharged to 20 1 stainless steel barrels and allowed to mature at a temperature of 8 °C for 15 days. Subsequently analyses of the HMR and CONI content are made. The following values have been measured: HMR 73.1 mg and CONI 10.2 mg in one litre of beer.
2. For brewing 20 litres of bottom fermented beer, 24 litres of unhopped wort containing 10 % extract by weight obtained by traditional mashing were used. During wort boiling, i.e. after 15 minutes of boiling, 40 g of chips made from knots of the European spruce are added. This corresponds to a total lignans concentration of 100 mg/l in the finished beverage. Then boiling takes place for 75 minutes. Subsequently the hopped wort is cooled down and water is added to a value of 12 % extract. Then it is fermented using bottom fermentation brewery yeast. After five days of fermentation at a temperature of 13 °C, the beer is discharged to 20 1 stainless steel barrels and allowed to mature at a temperature of 8 °C for 15 days. Subsequently, analyses of the HMR and CONI content are made. The following values have been measured: HMR 86.3 mg and CONI 9.74 mg in one litre of beer.
3. For brewing 20 litres of bottom fermented beer, 24 litres of unhopped wort containing 10 % extract by weight obtained by traditional mashing were used. During wort boiling, i.e. after 10 minutes, 5.3 ml of alcohol extract of lignans made from knots of the European spruce, with HMR and CONI concentrations of 172.78 mg/ml and 16.3 mg/ml, respectively, are added. This corresponds to a total lignans concentration of 50 mg/l in the finished beverage. Then boiling takes place for 65 minutes. Subsequently 20 g of granulated hops with an alpha bitter acids concentration of 3.7 % are added to the hopped wort. The hopped wort is then boiled for another 15 minutes; thereafter, it is cooled down and water is added to a value of 12 % extract. Then bottom fermentation yeast is added. After five days of fermentation at a temperature of 13 °C, the beer is discharged to 20 1 stainless steel barrels and allowed to mature at a temperature of 8 °C for 15 days. Subsequently, analyses of the HMR and CONI content are made. The following values have been measured: HMR 31.45 mg and CONI 5.06 mg in one litre of beer.
4. For brewing 20 litres of bottom fermented beer, 24 litres of unhopped wort containing 10 % extract by weight obtained by traditional mashing were used. During wort boiling, i.e. after 10 minutes of boiling, 20 g of chips made from knots of the European spruce are added. This corresponds to the total concentration of lignans in the finished beverage equalling 50 mg/l. Then, boiling follows for 65 minutes. Subsequently, 20 g granulated hops with a concentration of alpha bitter acids of 3.7 % are added to the hopped wort. The hopped wort is then boiled for another 15 minutes; thereafter, it is cooled down and water is added to a valued of 12 % extract. Then bottom fermentation yeast is added. After five days of fermentation at a temperature of 13 °C, the beer is discharged to 20 1 stainless steel barrels and allowed to mature at a temperature of 8 °C for 15 days. Subsequently, analyses of the HMR and CONI content are made. The following values have been measured: HMR 31.45 mg and CONI 5.06 mg in one litre of beer.
5. For brewing 20 litres of bottom fermented beer, 24 litres of unhopped wort containing 10 % extract by weight obtained by traditional mashing were used. During wort boiling, i.e. after 10 minutes of boiling, 10 ml of aqueous extract from chips from the European spruce knots are added. This corresponds to a total lignans concentration of 50 mg/l in the finished beverage. Then boiling takes place for 65 minutes. Subsequently, 20 g of granulated hops with an alpha bitter acids concentration of 3.7 % is added to the hopped wort. The hopped wort is then boiled for another 15 minutes; thereafter, it is cooled down and water is added a value of 12 % extract. Then bottom fermentation yeast is added. After five days of fermentation at a temperature of 13 °C, the beer is discharged to 20 1 stainless steel barrels and allowed to mature at a temperature of 8 °C for 15 days. Subsequently, analyses of the HMR and CONI content are made. The following values have been measured: HMR 33.21 mg and CONI 4.24 mg in one litre of beer.

### Industrial Applicability

Beer and beer-based beverages with an increased content of natural lignans extend the present range of beverages. They also help increase the intake of health-beneficial substances, and thus positively influence the health condition of the population.

## Claims

1. Beer and beer-based beverages containing lignans **characterized by** the fact that beer and beer-based beverages contain 1 to 200 mg of lignans per litre of beverage.

2. Beer and beer-based beverages containing lignans according to Claim 1 **characteriz ed** by containing also 0.01 to 1.0 g of granulated hops per litre of beverage.

3. A method of production of beer and beer-based beverages containing lignans according to claim 2 **characterized by** adding pre-treated aqueous extract made from knots of the European spruce, as a source of lignans, to the basic ingredients of both beer and beer-based beverages.

4. A method of production of beer and beer-based beverages containing lignans according to claim 2 **characterized by** adding chips from knots of the European spruce, as a source of lignans, to the basic ingredients of both beer and beer-based beverages.

5. A method of production of beer and beer-based beverages containing lignans according to claim 3 **characterized by** adding aqueous extract made from the European spruce at any production stage, but preferably at the initial stages of wort boiling, to ensure that the effect on the beer aroma and flavour is minimal.

6. A method of production of beer and beer-based beverages containing lignans according to claim 4 **characterized by** adding chips made from knots of the European spruce at any production stage, but preferably at the final stages of wort boiling, to ensure that the effect on the beer aroma and flavour is high.

## Patentansprüche

1. Bier und Getränke auf Bierbasis, die Lignane enthalten, **dadurch gekennzeichnet, dass** Bier und Getränke auf Bierbasis 1 bis 200 mg Lignane pro Liter Getränk enthalten.

2. Bier und lignanhaltige Getränke auf Bierbasis nach Anspruch 1, **dadurch gekennzeichnet, dass** sie zusätzlich 0,01 bis 1,0 g granulierten Hopfen pro Liter Getränk enthalten.

3. Verfahren zur Herstellung von Bier und lignanhaltigen Getränken auf Bierbasis gemäß Anspruch 2, **gekennzeichnet durch** Zugabe von vorbehandeltem wässrigem Extrakt aus Ästen der europäischen Fichte als Quelle von Lignanen zu den Grundzutaten sowohl von Bier als auch von Getränken auf Bierbasis.

4. Verfahren zur Herstellung von Bier und lignanhaltigen Getränken auf Bierbasis nach Anspruch 2, **gekennzeichnet durch** Zugabe von Spänen aus Ästen der europäischen Fichte als Quelle von Lignanen zu den Grundzutaten sowohl von Bier als auch von Getränken auf Bierbasis.

5. Verfahren zur Herstellung von Bier und lignanhaltigen Getränken auf Bierbasis nach Anspruch 3, **gekennzeichnet durch** Zugabe von wässrigem Extrakt aus der europäischen Fichte in egal welcher Produktionsstufe, vorzugsweise jedoch in der Anfangsphase des Würzekochens, um sicherzustellen, dass der Einfluss auf das Bieraroma und den Biergeschmack minimal ist.

6. Verfahren zur Herstellung von Bier und Biergetränken, die Lignane enthalten, nach Anspruch 4, **gekennzeichnet durch** Zugabe von Spänen aus Ästen der europäischen Fichte in egal welcher Produktionsstufe, vorzugsweise jedoch in der Endphase des Würzekochens, um sicherzustellen, dass der Einfluss auf das Bieraroma und den Biergeschmack hoch ist.

## Revendications

1. Bière et boissons à base de bière contenant des lignanes **caractérisées en ce que** la bière et les boissons à base de bière contiennent de 1 à 200 mg de lignanes par litre de boisson.

2. Bière et boissons à base de bière contenant des lignanes selon la revendication 1 **caractérisées en ce qu'**elles contiennent également de 0,01 à 1,0 g de houblon granulé par litre de boisson.

3. Méthode de fabrication de bière et des boissons à base de bière contenant des lignanes selon la revendication 2 **caractérisée en ce qu'**un extrait aqueux prétraité fabriqué à partir des nœuds de l'épicéa européen comme source de lignanes est ajouté aux ingrédients de base de la bière et des boissons à base de bière.

4. Méthode de fabrication de bière et des boissons à base de bière contenant des lignanes selon la revendication 2 **caractérisée en ce que** les feuilles de nœuds de l'épicéa européen comme source de lignanes sont ajoutés aux ingrédients de base de la bière et des boissons à base de bière.

5. Méthode de fabrication de bière et des boissons à base de bière contenant des lignanes selon la revendication 3 **caractérisée en ce que** l'extrait aqueux fabriqué à partir de l'épicéa européen est ajouté à n'importe quelle étape de fabrication, mais de préférence aux étapes initiales de l'ébullition du moût pour garantir que l'effet sur l'arôme et la saveur de la bière est minimal.

6. Méthode de fabrication de bière et des boissons à base de bière contenant des lignanes selon la revendication 4 **caractérisées en ce que** les copeaux fabriqués à partir des nœuds de l'épicéa européen sont ajoutés à n'importe quelle étape de fabrication, mais de préférence aux étapes finales de l'ébullition du moût pour garantir que l'effet sur l'arôme et la saveur de la bière est élevé.
